# EUROPEAN PATENT APPLICATION

(11) **EP 4 371 726 A1**
(43) Date of publication of application: **22.05.2024**
(21) Application number: 22842103.8
(22) Date of filing: 12.07.2022
(51) Int. Cl.: B29C 43/52, B29C 43/58, B29C 70/42

(54) **MOLDING DEVICE AND MOLDING METHOD**

(30) Priority: 13.07.2021 JP 2021115704
(71) Applicant: KAWASAKI JUKOGYO KABUSHIKI KAISHA, Hyogo 650-8670 (JP)
(72) Inventor: OKUMURA, Kenshiro, Chuo-ku, Kobe-shi Hyogo 650-8670 (JP); HAMAMOTO, Takaya, Chuo-ku, Kobe-shi Hyogo 650-8670 (JP); OCHI, Sayaka, Chuo-ku, Kobe-shi Hyogo 650-8670 (JP); SHIMADA, Naoki, Chuo-ku, Kobe-shi Hyogo 650-8670 (JP); KAWAMATA, Akio, Chuo-ku, Kobe-shi Hyogo 650-8670 (JP); OUCHI, Yuya, Chuo-ku, Kobe-shi Hyogo 650-8670 (JP)
(74) Representative: Leinweber & Zimmermann
(86) International application number: PCT/JP2022/027370
(87) International publication number: WO 2023/286759

(57) **Abstract**

A molding device includes: a lower mold that supports a workpiece containing a thermoplastic resin and that is heated to a predetermined temperature; an upper mold that is opposed to the lower mold, that presses the workpiece, and that is heated to a predetermined temperature; a transfer device that moves the lower mold and the upper mold relative to each other in a transfer direction of the workpiece; and control circuitry. The lower mold includes temperature-controlled regions adjacent to one another in the transfer direction, the temperature-controlled regions including a first lower mold temperature-controlled region and a second lower mold temperature-controlled region having a temperature lower than a temperature of the first lower mold temperature-controlled region. The control circuitry changes proportions of the first and second lower mold temperature-controlled regions in the lower mold as a function of a relative position between the upper and lower molds.

## Description

### Technical Field

The present disclosure relates to a device and method for molding a workpiece including a thermoplastic composite.

### Background Art

Conventionally, aircraft fuselage panels (skin panels) are produced by combining elongated panels each of which has a length of several meters and which are divided circumferentially and longitudinally from one another because this way of production is advantageous in terms of ease of molding and ease of assembly. In recent years, thermoplastic composites (CFRTPs) have been used as the material of skin panels. Examples of molding methods for producing elongated panels made of thermoplastic composites include autoclave molding as disclosed in Patent Literature 1 and press molding as disclosed in Patent Literature 2 or 3.

### Citation List

### Patent Literature

PTL 1: Japanese Laid-Open Patent Application Publication No. 2018-089825
PTL 2: Japanese Patent No. 6766268
PTL 3: US Patent No. 10029426

### Summary of Invention

### Technical Problem

Autoclave molding of thermoplastic composites involves consolidation (molding under heat and pressure) at a high temperature (e.g., 400°C), and for this reason there are few auxiliary materials that can be used in the autoclave molding. Moreover, the time taken for the consolidation is so long that it is difficult to shorten the production time. In addition, the autoclave molding requires high energy cost.

Press molding is generally unfit for producing elongated panels because of limitations on the press dimensions (see Patent Literature 2, for example). Even with the use of CCM (Continuous Compression Molding) known as a technique for continuous molding of thermoplastic composites, it is difficult to press a large-sized panel or a panel with a varying cross-section.

Patent Literature 3 aims to solve the above problem of press molding. In this literature, an elongated panel is produced by a molding method that includes placing a stack of prepregs into an elongated press mold and repeating consolidation and longitudinal movement of the mold. However, in this method, the step of cooling the consolidated panel is performed by natural cooling in which the panel is exposed to atmosphere, and consolidation of the entire panel and cooling of the parts of the panel are carried out as different steps separate from each other. Thus, much time is required to complete the molding process.

It is therefore an object of the present disclosure to provide a device and method for molding of thermoplastic composites, the device and method being adapted to shorten the production time in thermoplastic composite molding and allow for desired molding of a large-sized workpiece or a workpiece with a varying cross-section.

### Solution to Problem

A molding device of the present disclosure includes: a lower mold that supports a workpiece containing a thermoplastic resin and that is heated to a predetermined temperature; an upper mold that is opposed to the lower mold, that presses the workpiece, and that is heated to a predetermined temperature; a transfer device that moves the lower mold and the upper mold relative to each other in a transfer direction of the workpiece; and control circuitry, wherein the lower mold includes temperature-controlled regions adjacent to one another in the transfer direction, the temperature-controlled regions including a first lower mold temperature-controlled region and a second lower mold temperature-controlled region having a temperature lower than a temperature of the first lower mold temperature-controlled region, and the control circuitry changes proportions of the first lower mold temperature-controlled region and the second lower mold temperature-controlled region in the lower mold as a function of a relative position between the upper mold and the lower mold.

In accordance with the present disclosure, the lower mold supporting the workpiece is moved by the transfer device relative to the upper mold in the transfer direction. Thus, different portions of the workpiece that are adjacent to one another in the transfer direction can be pressed sequentially in the transfer direction. This makes it possible to achieve desired molding of a large-sized workpiece or a workpiece with a varying cross-section by individually pressing different portions of the workpiece that are adjacent to one another in the transfer direction. Additionally, in the lower mold, the first and second temperature-controlled regions, whose temperatures are controlled, are formed adjacent to each other in the transfer direction, and the proportions of the first and second temperature-controlled regions are changed as a function of the relative position between the upper and lower molds. Thus, different portions of the workpiece can be simultaneously subjected to different processes including preheating, consolidation, and cooling without having to remove the workpiece from the lower mold during the molding process. This allows for shortening of the production time. Additionally, energy cost as required for autoclave molding can be eliminated to offer an economic advantage.

### Advantageous Effects of Invention

The present disclosure can provide a device and method for molding of thermoplastic composites, the device and method being adapted to shorten the production time in thermoplastic composite molding and allow for desired molding of a large-sized workpiece or a workpiece with a varying cross-section.

### Brief Description of Drawings

FIG. 1A is a perspective view showing a workpiece, FIG. 1B is a schematic perspective view showing a molding device for molding the workpiece of FIG. 1A, and FIG. 1C is a perspective view showing a molded workpiece.
FIG. 2 shows the configuration of a molding device according to one embodiment of the present invention.
FIG. 3 is a block diagram showing the configuration of a control system in the molding device.
FIG. 4A is a view for explaining a preheating step, and FIG. 4B is a view for explaining a first pressing step.
FIG. 5A is a view for explaining a moving step, and FIG. 5B is a view for explaining a second pressing step.
FIG. 6 is a view for explaining a third pressing step.
FIG. 7 is a flowchart showing the flow of a molding process using the molding device of the present embodiment.
FIG. 8A is a perspective view of a lower mold, FIG. 8B is a perspective view showing a stringer located facing the lower mold of FIG. 8A, and FIG. 8C is a cross-sectional view showing the stringer located facing the lower mold.
FIG. 9A shows a variant of a preheating region, and FIG. 9B shows another variant of the preheating region.

### Description of Embodiments

Hereinafter, a molding device and a molding method according to one embodiment of the present disclosure will be described with reference to the drawings. The molding device and molding method described below are merely an exemplary embodiment of the present disclosure. The present disclosure is not limited to the embodiment described below, and additions, deletions, and changes may be made without departing from the gist of the present disclosure.

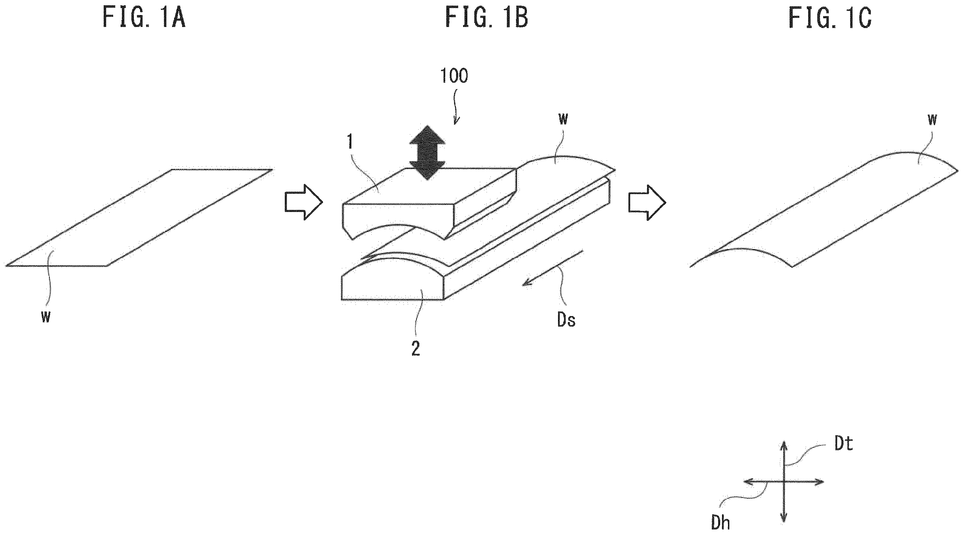

FIG. 1A is a perspective view showing a workpiece w, FIG. 1B is a schematic perspective view showing a molding device 100 for molding the workpiece w of FIG. 1A, and FIG. 1C is a perspective view showing a skin panel (aircraft fuselage panel) as the molded workpiece w.

The molding device 100 of the present embodiment, which is shown in FIG. 1B, is a device for a molding process in which the sheet-shaped workpiece w as shown in FIG. 1A is bent in the thickness direction of the workpiece w in a manner as shown in FIG. 1C. In the present embodiment, the workpiece w is a prepreg stack prepared in advance and including prepregs composed of carbon fibers impregnated with a thermoplastic resin.

Each of the prepregs is an intermediate material composed of fibers impregnated with a resin. The prepregs are stacked on top of one another to form a stack, which is then subjected to steps such as consolidation to produce a fiber-reinforced plastic (FRP). The fiber-reinforced plastic subjected to molding in this example is a carbon fiber-reinforced thermoplastic composite (CFRTP).

As shown in FIG. 1B, the molding device 100 of the present embodiment includes an upper mold 1 and a lower mold 2. The lower surface of the upper mold 1 is concave, and the upper surface of the lower mold 2 is convex to fit closely to the lower surface of the upper mold 1. As described in detail below, the workpiece w is molded while being transferred in a transfer direction Ds by relative movement between the upper mold 1 and the lower mold 2. Specifically, the workpiece w placed on the lower mold 2 is transferred to a predetermined position in the transfer direction Ds, and at the predetermined position the upper mold 1 moves downward to press the workpiece w. After that, the upper mold 1 is raised, and the workpiece w is transferred by the above-mentioned relative movement to a next predetermined position in the transfer direction Ds and pressed by the upper mold 1 at the predetermined position. In this manner, the molding device 100 repeats the cycle consisting of transferring the workpiece w and pressing the workpiece w. As a result, the workpiece w as shown in FIG. 1C, which has a curved shape extending continuously in the longitudinal direction of the workpiece w, can be obtained. Hereinafter, the method for molding the workpiece w will be described in detail. Throughout the subsequent description and drawings, a direction which is perpendicular to the transfer direction Ds and in which the workpiece w placed on the lower mold 2 extends is defined as a width direction Dh, and a direction perpendicular to both the transfer direction Ds and the width direction Dh is defined as a height direction Dt.

In the present embodiment, the relative movement between the upper mold 1 and the lower mold 2 is effected by moving the lower mold 2. The present disclosure encompasses embodiments in which the relative movement is effected by moving the upper mold 1. In the present embodiment, as described above, the mold on which the workpiece w is placed is the lower mold 2, and the opposite mold is the upper mold 1. The terms "upper" and "lower" are merely used for the sake of convenience, and the direction in which the molds face each other need not coincide with the gravity direction and may be any direction that does not depart from the gist of the present disclosure.

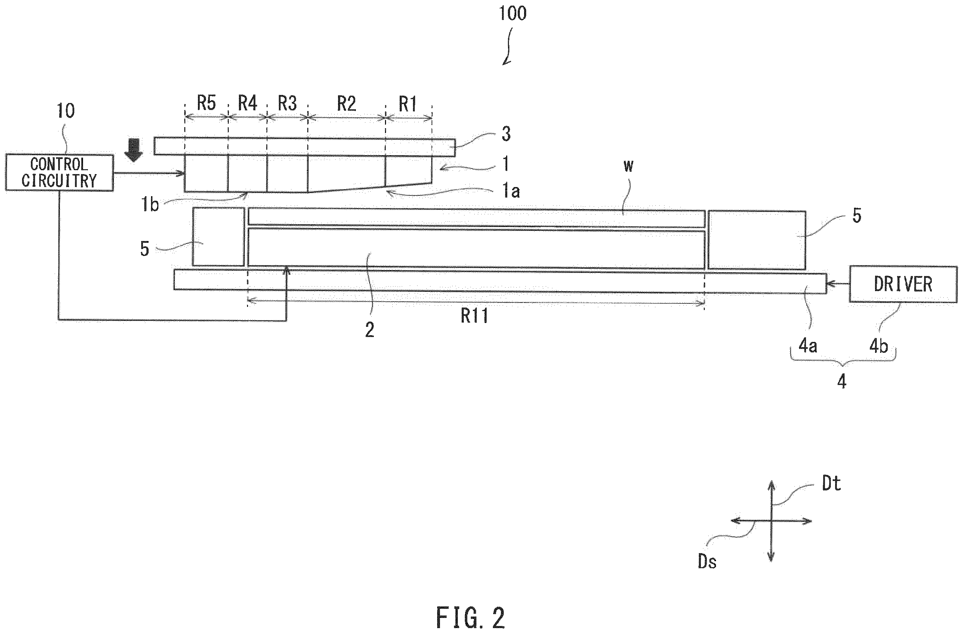

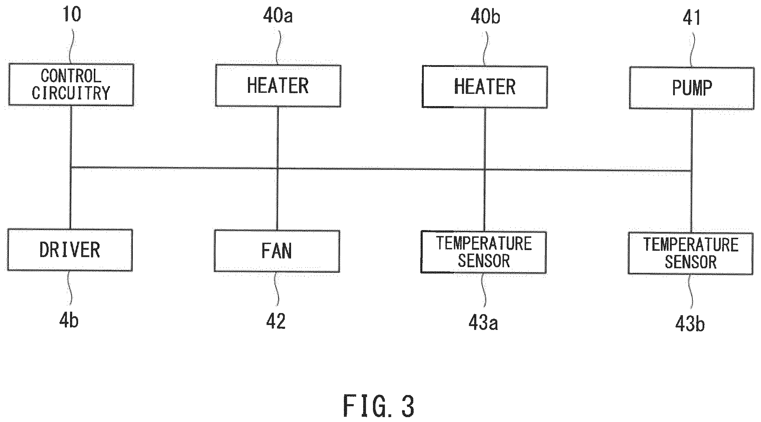

FIG. 2 shows the configuration of the molding device 100 according to the present embodiment, and FIG. 3 is a block diagram showing the configuration of a control system in the molding device 100. As shown in FIG. 2, the molding device 100 includes an upper mold support 3, a transfer device 4, pressure-receiving plates 5, and control circuitry 10 in addition to the upper and lower molds 1 and 2 described above.

The control circuitry 10 in the present disclosure may be implemented using circuitry or processing circuitry which includes general purpose processors, special purpose processors, integrated circuits, ASICs (Application Specific Integrated Circuits), conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The lower mold 2 is, for example, rectangular in plan. The lower mold 2 is heated to a predetermined temperature and supports the workpiece w. In the present embodiment, the melting point Tm of the workpiece w may be, but is not limited to, 305°C. The lower mold 2 is heated to a temperature lower than the melting point Tm of the workpiece w. In this example, the lower mold 2 is heated to a predetermined temperature T11. The predetermined temperature T11 may be, but is not limited to, 300°C. Any suitable temperature may be used as the predetermined temperature T11 depending on the melting point Tm of the workpiece w, and the value of the predetermined temperature T11 is chosen, for example, in the range of Tm ± 10°C. The temperature of the lower mold 2 is detected by a temperature sensor 43b such as a thermocouple or an infrared camera. Heaters 40b are located within the lower mold 2. For example, 12 heaters 40b are located in the longitudinal direction of the workpiece w, namely, in the transfer direction Ds. The heaters 40b are not limited to this arrangement and number.

For example, four heaters 40b are located in the width direction Dh perpendicular to the transfer direction Ds. Thus, the number of control channels through which the control circuitry 10 controls the heaters 40b for the lower mold 2 (i.e., the total number of the heaters 40b) is 48. The heating by the heaters 40b is controlled by the control circuitry 10 to adjust the temperature of the lower mold 2. As described later, during the process of molding of the workpiece w, the temperature of the lower mold 2 is controlled by the above configuration such that the lower mold 2 has two temperature-controlled regions, one of which is a temperature-controlled region R11 (first lower mold temperature-controlled region) controlled to the predetermined temperature T11 and the other of which is a temperature-controlled region R12 (second lower mold temperature-controlled region) adjusted to a temperature T12 lower than the predetermined temperature T11. The length of the lower mold 2 in the transfer direction Ds may be, but is not limited to, 2500 mm.

The upper mold 1 is supported by the upper mold support 3. The upper mold 1 can move upward and downward in the height direction Dt, and is opposed to the lower mold 2, and presses the workpiece w. The upper mold 1 includes temperature-controlled regions that are adjacent to one another in the transfer direction Ds and whose temperatures are controlled independently of one another by the control circuitry 10. During molding of the workpiece w, the control circuitry 10 controls the temperatures of the temperature-controlled regions adjacent to one another in the transfer direction Ds to different temperatures.

Specifically, as shown in FIG. 2, the upper mold 1 includes five temperature-controlled regions R1, R2, R3, R4, and R5. The temperature-controlled regions R1 to R5 are adjacent to one another in the transfer direction Ds. Heaters 40a are located within the upper mold 1, and at least one heater 40a is located for each temperature-controlled region. The heating of the upper mold 1 by the heaters 40a is controlled by the control circuitry 10. In the present embodiment, for example, the heaters 40a are arranged such that in the transfer direction Ds of the workpiece w, one heater 40a is located in each of the temperature-controlled regions R1, R3, R4, and R5 and two heaters 40a are located in the temperature-controlled region R2. In the width direction Dh, for example, four heaters 40a are located in each of the temperature-controlled regions. Since, as described above, six heaters 40a are located in the transfer direction Ds of the workpiece w and four heaters 40a are located in the width direction Dh of the workpiece w, the number of control channels through which the control circuitry 10 controls the heaters 40a for the upper mold 1 (i.e., the total number of the heaters 40a) is 24. The arrangement and number of the heaters 40a and the number of the control channels are not limited to those described above.

The transfer device 4 includes a base 4a and a driver 4b. The lower mold 2 and the pressure-receiving plates 5 are located on the base 4a. The pressure-receiving plates 5 are located on both ends of the lower mold 2 in the transfer direction Ds and on both ends of the lower mold 2 in the width direction Dh. The pressure-receiving plates 5 are in contact with the lower mold 2.

The driver 4b of the transfer device 4 is controlled by the control circuitry 10 to transfer the base 4a supporting the lower mold 2 in the transfer direction Ds. The driver 4b may be, for example, a gear structure including a rack gear, a pinion gear, and an electric motor. In this case, the pinion gear connected to a rotating shaft of the electric motor rotates to move the rack gear located on the base 4a in the transfer direction Ds. Thus, the base 4a moves in the transfer direction Ds, and accordingly the lower mold 2 is moved in the transfer direction Ds. The transfer device 4 and the driver 4b may take any other suitable forms as long as the transfer device 4 and the driver 4b perform the above-described functions and do not impair the essence of the present disclosure. For example, the drive source of the driver 4b may be an internal combustion engine.

The control circuitry 10 controls the respective temperatures T1 to T5 of the temperature-controlled regions R1 to R5 such that the temperatures T1 to T5 are in descending order from upstream to downstream (from right to left in FIG. 2) in the transfer direction Ds. Specifically, the temperature T1 of the temperature-controlled region R1 is increased to a process temperature Tp (e.g., in the range of 350 to 400°C), which is the highest of the temperatures of the regions R1 to R5. The process temperature Tp is a reference temperature for molding, and the value of the process temperature Tp is chosen in view of the melting point Tm of the workpiece w. The process temperature Tp is not limited to the range mentioned above.

The temperature T2 of the temperature-controlled region R2 is set to a temperature lower than the temperature of the temperature-controlled region R1, and equal to or higher than the melting point Tm. The purpose of this setting of the temperature T2 of the temperature-controlled region R2 is to make it possible, when pressing the workpiece w by a downstream end of a preheating region 1a described later, to accomplish the pressing at a temperature at which the viscosity of the workpiece w begins to decrease. The temperatures T1 to T5 of the temperature-controlled regions R1 to R5 of the upper mold 1 are detected by temperature sensors 43a, just as the temperature of the lower mold 2 is detected by the temperature sensor 43b.

The temperatures T3 to T5 of the temperature-controlled regions R3, R4, and R5 of the upper mold 1 are set to satisfy the relationship T2 > T3 > T4 > T5 as previously mentioned. The temperatures T3 to T5 may be set to, but are not limited to, temperatures ranging from 50 to 150°C below the process temperature Tp. In the present embodiment, the length of the upper mold 1 in the transfer direction Ds is, for example, 1080 mm. The length of the upper mold 2 in the transfer direction Ds is not limited to 1080 mm. The lengths of the upper and lower molds 1 and 2 in the transfer direction Ds may be changed, for example, depending on the length of the workpiece w in the transfer direction Ds. The lengths of the temperature-controlled regions R1, R2, R3, R4, and R5 of the upper mold 1 in the transfer direction Ds and the number of such temperature-controlled regions are chosen depending on the lengths of the upper mold 1 and the workpiece w in the transfer direction Ds and in association with predetermined distances that the base 4a is moved in the transfer direction Ds and which will be described later.

The upper mold 1 includes a preheating region 1a located on the upstream side in the transfer direction Ds and a downstream heating region 1b located downstream of the preheating region 1a in the transfer direction Ds. In the present embodiment, the preheating region 1a extends over the temperature-controlled regions R1 and R2 described above, and the downstream heating region 1b extends over the temperature-controlled regions R3, R4, and R5 described above.

The preheating region 1a is located away from the workpiece w when the downstream heating region 1b is in contact with the workpiece w. That is, the thickness of the preheating region 1a in the height direction Dt is smaller than the thickness of the downstream heating region 1b in the height direction Dt. In other words, during molding of the workpiece w in the present embodiment, the temperature-controlled regions R1 and R2 of the upper mold 1 do not touch the workpiece w, while the temperature-controlled regions R3 to R5 perform intermittent repetition of contact with, and movement away from, the workpiece w. In the present embodiment, in order to be located away from the workpiece w, the preheating region 1a includes at least one horizontal surface, inclined surface, or curved surface that faces the workpiece w. FIG. 2 shows an example where the preheating region 1a includes an inclined surface that faces the workpiece w.

The foregoing has described the lengths of the temperature-controlled regions R1 to R5 in the transfer direction Ds, the temperatures T1 to T5 of the temperature-controlled regions R1 to R5, the temperature-controlled regions R11 and R12 of the lower mold, and the temperatures T11 and T12 of the temperature-controlled regions R11 and R12. In the present disclosure, it is preferable that at least the following requirements be met: the temperature of the entire preheating region 1a is set to a temperature equal to or higher than the melting point of the workpiece w, the temperature of the downstream heating region 1b is set to a temperature lower than the melting point of the workpiece w, and the temperature of the lower mold 2 is set to a temperature lower than the melting point of the workpiece w and equal to or higher than the temperature of the downstream heating region 1b. It has been experimentally established that in the present embodiment, dividing each of the preheating region 1a and the downstream heating region 1b into temperature-controlled regions set to different temperatures is effective to accelerate resin crystallization during consolidation of the workpiece w. The configuration described above is based on this experimentally established fact.

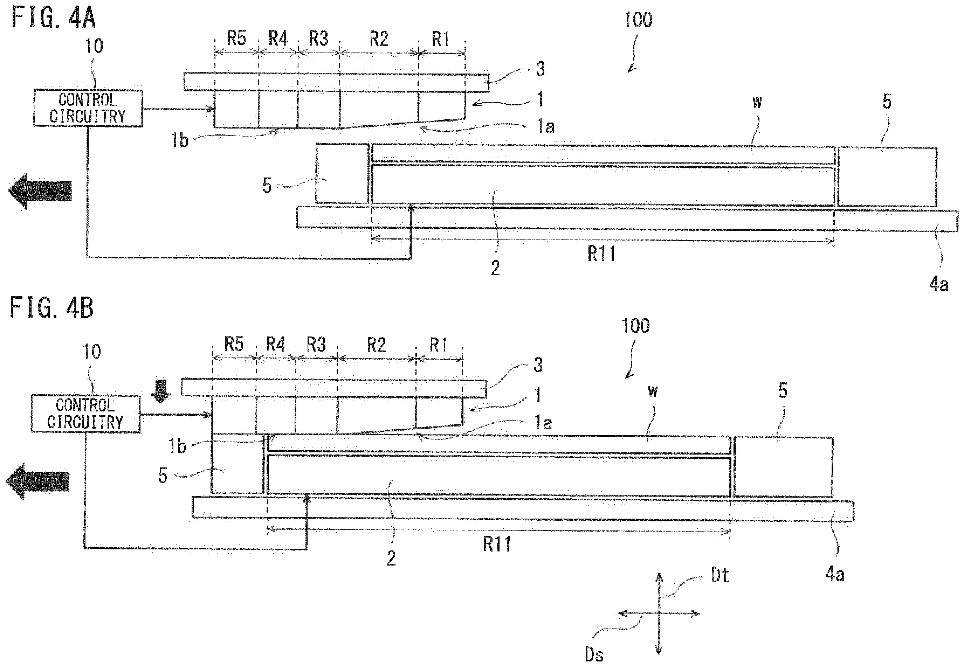

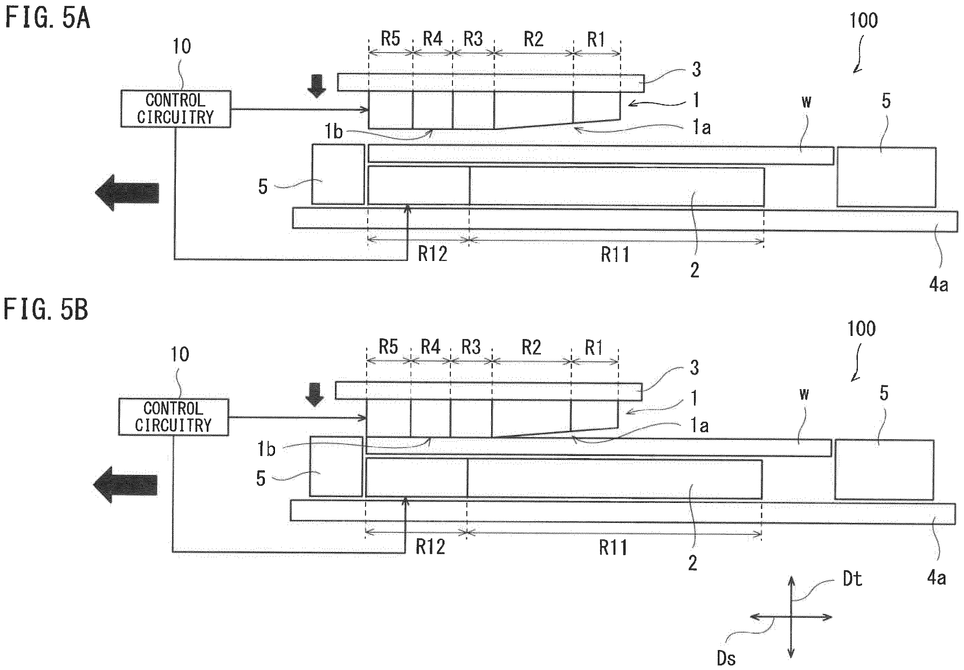

Hereinafter, the steps of a molding method using the molding device 100 of the present embodiment will be individually described with reference to the drawings. FIG. 4A is a view for explaining a first preheating step of preheating the workpiece w, and FIG. 4B is a view for explaining a first consolidation step. FIGS. 5A and 5B are views for explaining second and subsequent consolidation steps, transfer of the workpiece w, and the step of changing the proportions of the temperature-controlled regions in the lower mold 2. In FIGS. 4A, 4B, 5A, and 5B, as in FIG. 2, the upstream side in the transfer direction Ds is depicted on the right side, and the downstream side in the transfer direction Ds is depicted on the left side.

The step shown in FIG. 4A is as follows. First, the downstream end (left end in the figure) of the flat workpiece w is subjected to first preheating (namely, heating prior to pressing). In the first preheating, the downstream end of the workpiece w is heated while the preheating region 1a (portion corresponding to the temperature-controlled regions R1 and R2) of the upper mold 1 is located away from the downstream end of the workpiece w. The heating increases the temperature of the downstream end of the workpiece w. At this stage, the lower mold 2 includes only the temperature-controlled region R11.

The next step shown in FIG. 4B is as follows. The base 4a is moved a predetermined distance in the transfer direction Ds. The movement distance is, for example, 1/10 of the length of the workpiece w in the transfer direction Ds. In conjunction with the movement of the base 4a, the workpiece w moves the predetermined distance in the transfer direction Ds. After that, the upper mold 1 is lowered to press the downstream end of the workpiece w. Specifically, the downstream end of the workpiece w is pressed (consolidated) by the temperature-controlled region R3 of the upper mold 1 and the temperature-controlled region R11 of the lower mold 2. The pressing time may be, but is not limited to, 10 seconds or more. During the pressing, a portion (such as a middle portion) of the workpiece w that is upstream of the downstream end is located such that the portion as viewed in the height direction Dt of the preheating region 1a overlaps the preheating region 1a. Thus, in this step, that portion of the workpiece w which is upstream of the downstream end is preheated simultaneously with the pressing of the downstream end. During this step, the workpiece w and the preheating region 1a are not in contact because of the above-descried shape of the upper mold 1. Thus, the preheating is effected by heat radiation of the preheating region 1a or by convection of air heated by the preheating region 1a.

The next step shown in FIG. 5A is as follows. The upper mold 1 is raised, and the base 4a is moved a predetermined distance in the transfer direction Ds. In conjunction with the movement of the base 4a, the workpiece w moves the predetermined distance in the transfer direction Ds. In this step, the temperature of the lower mold 2 is controlled by means as described later, and the lower mold 2 shifts from the state where the lower mold 2 includes only the temperature-controlled region R11 to the state where the lower mold 2 includes the temperature-controlled regions R11 and R12 adjacent to each other in the transfer direction Ds. The temperature-controlled region R12 is formed downstream of the temperature-controlled region R11. In the present embodiment, the boundary between the temperature-controlled regions R11 and R12 is located such that the temperature-controlled region R3 of the upper mold, as viewed from above in the height direction Ds, overlaps the boundary between the temperature-controlled regions R11 and R12. The downstream end of the workpiece w has moved to a location where the temperature-controlled region R4 or R5 (in the present embodiment, the temperature-controlled region R5) of the upper mold, as viewed from above in the height direction Ds, overlaps the downstream end of the workpiece w. In this state, as shown in FIG. 5B, the upper mold 1 is lowered to press the downstream end of the workpiece w and a portion of the workpiece w that is upstream of the downstream end. Specifically, the downstream end of the workpiece w is cooled by the temperature-controlled region R4 or R5 of the upper mold 1 and the temperature-controlled region R12 of the lower mold 2, and that portion of the workpiece w which is upstream of the downstream end is pressed (consolidated) by the temperature-controlled region R3 of the upper mold 1 and the temperature-controlled region R11 of the lower mold 2. During this step, the middle portion of the workpiece w is located under the preheating region 1a and thus is preheated.

As described above, in each of the second and subsequent consolidation steps, the following processes take place simultaneously: the portion of the workpiece w that was consolidated in the previous consolidation step is cooled by the temperature-controlled region R4 or R5 of the upper mold 1; another portion of the workpiece w is consolidated by the temperature-controlled region R3 of the upper mold 1 in the current consolidation step; and yet another portion of the workpiece w that is to be consolidated in the next consolidation step is preheated by the temperature-controlled region R1 or R2 of the upper mold 1. In other words, the downstream heating region 1b of the upper mold 1 includes a consolidation heating region (i.e., temperature-controlled region R3) for consolidation of the workpiece w and cooling regions (i.e., temperature-controlled regions R4 and R5) for cooling of the workpiece w.

The lower mold 2 includes unshown piping through which a cooling medium flows. For example, air or water is used as the cooling medium, and the lower mold 2 can be cooled by a water cooling technique in which the cooling medium is made to flow through the piping by means of a pump 41 (FIG. 3) under control of the control circuitry 10. Alternatively, the cooling of the lower mold 2 may be effected by an air cooling technique using a fan 42 (FIG. 3), or the water cooling technique and the air cooling technique may be used in combination. As previously described, when a portion of the workpiece w is cooled by the temperature-controlled region R4 or R5 of the upper mold 1 in the step of FIG. 5A, the lower mold 2 includes the temperature-controlled region R12 whose temperature has been adjusted by the cooling medium.

The proportions of the temperature-controlled region R12 and the temperature-controlled region R11 in the lower mold 2 are changed by the control circuitry 10. Specifically, in the present embodiment, where the temperature-controlled regions R4 and R5 of the upper mold 1 move relative to the lower mold 2 in the transfer direction Ds in conjunction with transfer of the workpiece w, the boundary between the temperature-controlled regions R11 and R12 is located such that the temperature-controlled region R3 of the upper mold, as viewed from above in the height direction Ds, overlaps the boundary between the temperature-controlled regions R11 and R12. Thus, whenever the temperature-controlled regions R4 and R5 of the upper mold are in contact with the workpiece w in the second and subsequent consolidation steps, the temperature-controlled regions R4 and R5 as viewed from above in the height direction Ds overlap the temperature-controlled region R12 of the lower mold. Thanks to this configuration of the present embodiment, transfer of the workpiece w and the steps of consolidation and cooling can be accomplished only by the upper and lower molds 1 and 2 without the need for any structure specialized for transfer of the workpiece w. This allows for high time efficiency of molding of thermoplastic resin products. As previously described, the temperature T12 of the temperature-controlled region R12 of the lower mold 2 is set to satisfy the relationship T11 > T12. The temperature T12 may be set to, but is not limited to, a temperature ranging from about 50 to 150°C below the melting point Tm of the workpiece w.

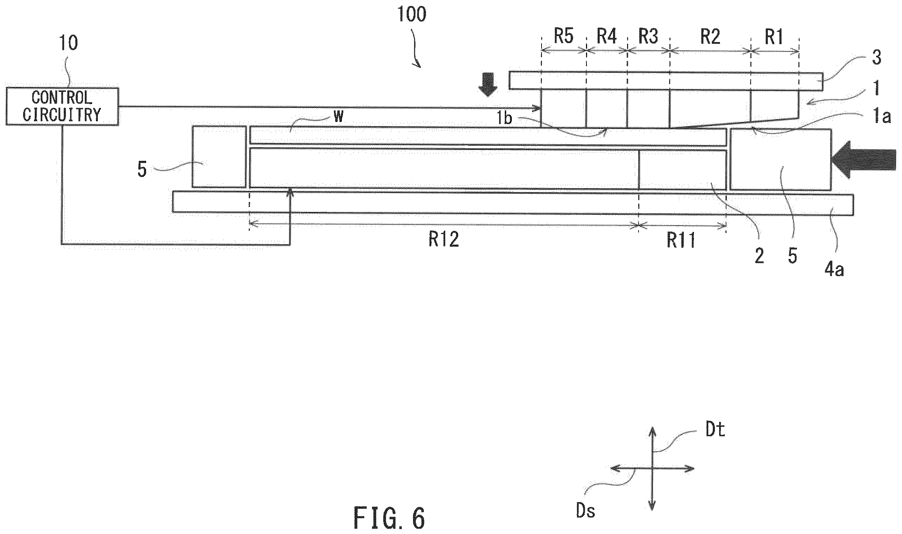

The above-described state of FIG. 5B is followed by movement of the base 4a in the transfer direction Ds, change of the proportions of the temperature-controlled regions R11 and R12 in the lower mold 2, and lowering of the upper mold 1 to establish the state as shown in FIG. 6. In the state of FIG. 6, the two steps as described with reference to FIG. 5B are carried out. After that, the two steps are repeated. Thus, the portion of the workpiece w that is to be consolidated by the upper and lower molds 1 and 2 shifts stepwise from the downstream end to the upstream end of the workpiece w. The whole process of molding the workpiece w using the molding device 100 of the present embodiment is completed once the upstream end of the workpiece w has been pressed and cooled in the second or any subsequent consolidation step.

As described above, with the use of the molding device 100 of the present embodiment, different portions of the workpiece w that are adjacent to one another in the transfer direction Ds can be simultaneously subjected to different processes including preheating, consolidation, and cooling in one pressing step performed on the workpiece w by the upper and lower molds 1 and 2, and the pressing step can be repeated in succession while moving the workpiece w in the transfer direction Ds.

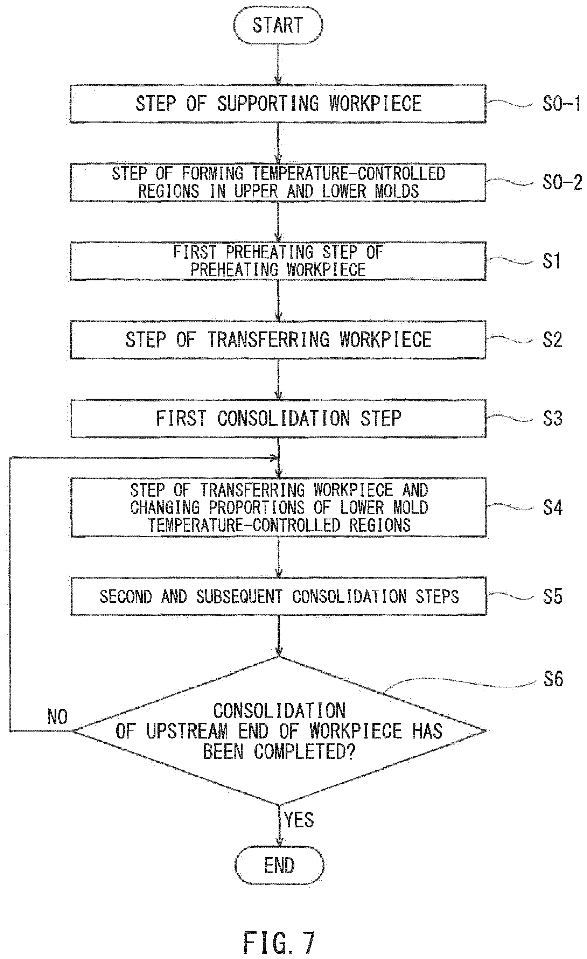

FIG. 7 is a flowchart showing the flow of the molding process using the molding device 100 of the present embodiment.

As shown in FIG. 7, the workpiece w is supported by the lower mold 2 in a preliminary step (step S0-1). After that, the control circuitry 10 operates to form the temperature-controlled regions R1 to R5 in the upper mold 1 and form the temperature-controlled region R11 in the lower mold 2 (step S0-2). These preliminary steps are followed by the main steps described below.

First, the workpiece w is subjected to the first preheating (step S1). Next, the workpiece w is moved a predetermined distance in the transfer direction Ds (step S2). This movement is followed by the first consolidation step (step S3). In the first consolidation step, as previously described, the portion of the workpiece w that was preheated in step S1 is consolidated (pressed), and at the same time preheating is performed on another portion of the workpiece w that is upstream of the portion being consolidated in the transfer direction Ds.

Next, the workpiece w is transferred, and the proportions of the temperature-controlled regions R11 and R12 of the lower mold in the transfer direction Ds are changed (step S4). Before step S4, the proportion of the temperature-controlled region R12 to the temperature-controlled region R11 is zero. The temperature-controlled region R12 is formed when step S4 is performed for the first time. As described below, step S4 is repeated a number of times. The proportion of the temperature-controlled region R12 to the temperature-controlled region R11 increases with repeated step S4.

Next, the second and subsequent consolidation steps are performed (step S5). In step S5, as previously described, cooling of a portion of the workpiece w that was consolidated in step S4, consolidation (pressing) of another portion of the workpiece w that was preheated in step S4, and preheating of yet another portion of the workpiece w that is upstream of the portion being consolidated in the transfer direction Ds, are all effected simultaneously. After that, in case that the workpiece w still has a portion to be pressed (NO in step S6), the molding process returns to step S4. In case that the workpiece w no longer has any portion to be pressed (YES in step S6), the molding process ends.

As described above, in the molding device 100 of the present embodiment, the lower mold 2 supporting the workpiece w is moved by the transfer device 4 relative to the upper mold 1 in the transfer direction Ds. Thus, different portions of the workpiece w that are adjacent to one another in the transfer direction Ds can be pressed sequentially in the transfer direction Ds. This makes it possible to achieve desired molding of a large-sized workpiece or a workpiece with a varying cross-section by individually pressing different portions of the workpiece that are adjacent to one another in the transfer direction. Additionally, in the lower mold 2, the first and second temperature-controlled regions R11 and R12, whose temperatures are controlled, are formed adjacent to each other in the transfer direction Ds. Furthermore, every time the lower mold 2 is transferred, the proportion of the temperature-controlled region R12 of the lower mold 2 to the temperature-controlled region R11 of the lower mold 2 in the transfer direction Ds is changed as a function of the relative position between the upper and lower molds 1 and 2. That is, as the lower mold 2 is moved downstream, the temperature-controlled region R11 narrows and the temperature-controlled region R12 broadens. This eliminates the need to use any specialized structure for transfer in the molding device 100 in which the pressing process by the upper and lower molds 1 and 2 is performed on different portions of the workpiece w in order from the downstream end to the upstream end of the workpiece w. Furthermore, unlike the case where the workpiece w is molded while maintaining the entire lower mold 2 at a uniform temperature, every pressing process performed by the upper and lower molds 1 and 2 is followed by cooling of the pressed portion of the workpiece w. This allows for shortening of the production time and cost reduction of the device.

In the present embodiment, the upper mold 1 includes temperature-controlled regions adjacent to one another in the transfer direction Ds, and the temperature-controlled regions include, in order from upstream to downstream in the transfer direction Ds, the preheating region 1a and the downstream heating region 1b having a temperature lower than that of the preheating region 1a. The preheating region 1a permits preheating of the workpiece w prior to press molding, and the downstream heating region 1b permits consolidation of the workpiece w. Thus, in one pressing step performed by the upper and lower molds 1 and 2, different portions of the workpiece w can be subjected simultaneously to different processes; specifically, one portion of the workpiece w is preheated, and at the same time another portion of the workpiece w is subjected to consolidation in which the workpiece w is pressed at a temperature lower than the preheating temperature.

In the present embodiment, the downstream heating region 1b includes temperature-controlled regions adjacent to one another in the transfer direction Ds, and the temperature-controlled regions include, in order from upstream to downstream in the transfer direction Ds, the temperature-controlled region 3 which is a consolidation heating region and the temperature-controlled regions R4 and R5 which are cooling regions each of which has a temperature lower than that of the temperature-controlled region R3. Unlike the case where the entire downstream heating region 1b has a uniform temperature, cooling for lowering the temperature of the workpiece w can be effected during the pressing step as described above. This contributes to further shortening of the production time.

In the present embodiment, the control circuitry 10 controls the temperature of the preheating region 1a of the upper mold 1 to a temperature equal to or higher than the melting point Tm of the workpiece w and controls the temperature of the downstream heating region 1b of the upper mold 1 to a temperature lower than the melting point of the workpiece w. By changing the temperatures of the preheating region 1a and the downstream heating region 1b according to parameters related to the workpiece w, one molding device 100 can be adapted for production of different kinds of molded products. For the same purpose, the control circuitry 10 further controls the temperatures of the temperature-controlled regions of the lower mold 2 to temperatures equal to or higher than the temperature of the downstream heating region of the upper mold 1 and lower than the melting point Tm of the workpiece w.

In the present embodiment, the molding device 100 is configured such that the preheating region 1a is located away from the workpiece w when the workpiece w is pressed by the upper and lower molds 1 and 2. Specifically, the preheating region 1a has a smaller thickness than the downstream heating region 1b in order to be located away from the workpiece w when the downstream heating region 1b is pressed against the workpiece w. The temperature-controlled regions of the downstream heating region 1b are set to temperatures higher than those of the temperature-controlled regions of the preheating region 1a. In other words, the thickest region of the upper mold 1 is set to a temperature lower than those of the other thinner temperature-controlled regions of the upper mold 1. In thermoplastic resin molding, preheating is preferred in which the temperature of the material is increased slowly over a certain period of time. If preheating involves bringing a hot mold into contact with the workpiece w, the workpiece w is rapidly heated and could suffer a molding defect such as heat-induced cracking or deformation. Thus, the upper mold 1 of the present disclosure is shaped as described above to perform preheating in a non-contact manner.

### (Variants)

The present disclosure is not limited to the above embodiment, and various modifications as described below may be made without departing from the gist of the present disclosure.

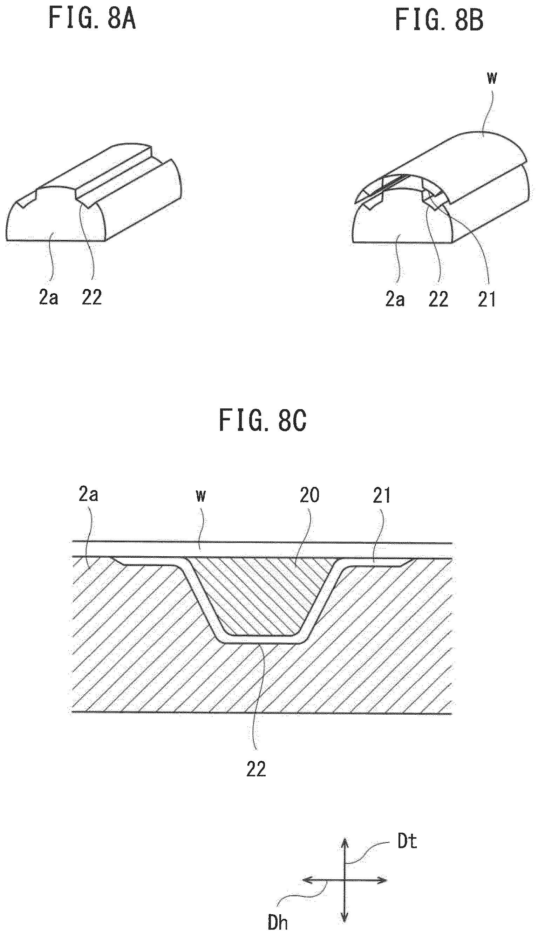

As shown in FIGS. 8B and 8C, the molding device 100 can mold a workpiece w which, for example, includes a stringer 21 having a hat-shaped cross-section and located on that surface of the workpiece w which is to be molded by a lower mold 2a. In this case, the stringer 21 is placed in a recess 22 formed in the lower mold 2a, and then a core 20 is inserted into a recess of the stringer 21. Subsequently, the workpiece w is placed along the surfaces of the lower mold 2a and the core 20 and molded in the same manner as in the embodiment described above. The temperature of the lower mold 2a is set to a temperature lower than the melting point of the stringer 21, and equal to or higher than the temperature of the downstream heating region 1b. The workpiece w and the stringer 21 are molded as one piece. The core is removed after the one-piece molding. Although in this example the stringer 21 is located on the surface of the workpiece w that faces the lower mold 2a, the present disclosure encompasses a configuration where a stringer is located on the surface of the workpiece w that faces the upper mold 1. In such a case, the recess 22 is formed in the upper mold 1.

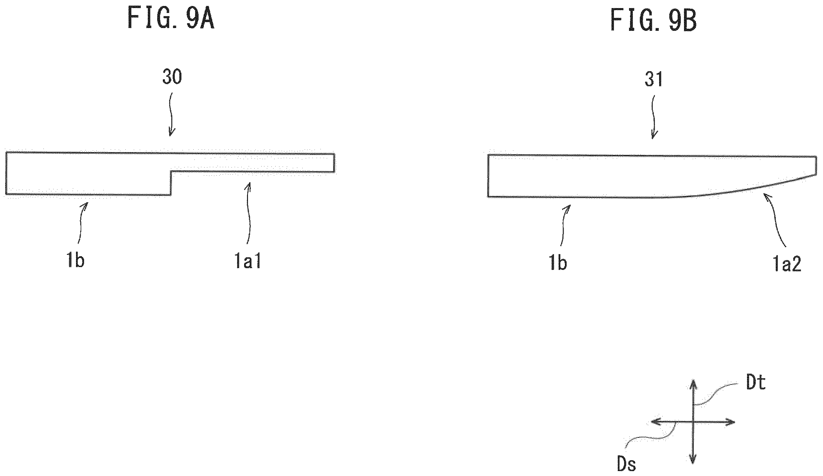

Although the above embodiment has been described using an example where the upper mold 1 includes the preheating region 1a including an inclined surface that faces the workpiece w, the present disclosure is not limited to this example. An upper mold 30 may be used which, as shown in FIG. 9A, includes a preheating region 1a1 that includes a horizontal surface extending over a part or the whole of its length and that is divided from the downstream heating region 1b by a stepped portion. Alternatively, an upper mold 31 may be used which, as shown in FIG. 9B, includes a preheating region 1a2 including a curved surface. In the case where there is a stepped portion at the boundary between the downstream heating region 1b and the preheating region 1a, the workpiece w subjected to pressing could have an undesired mold mark attributed to the stepped portion. Thus, it is preferable for the downstream heating region 1b and the preheating region 1a to be smoothly connected by an inclined surface or a curved surface.

Although the device of the above embodiment is configured such that the lower mold 2 is moved by the transfer device 4 in the transfer direction Ds to effect relative movement between the lower mold 2 and the upper mold 1 in the transfer direction Ds, the present disclosure is not limited to this configuration. The upper mold 1 may be moved in the transfer direction Ds, or both the upper mold 1 and the lower mold 2 may be moved. Although in the above embodiment the upper mold 1 is moved in the height direction Dt at the time of consolidation, the relative movement in the height direction Dt may be effected by moving the lower mold 2 or by moving both the upper mold 1 and the lower mold 2. In the present disclosure, the relative movement between the upper mold 1 and the lower mold 2 in the different directions may be effected by any means or mechanism.

In the above embodiment, the upper mold 1 and the lower mold 2 do not move relative to each other in the width direction Dh. In the case where the relative movement in the width direction Dh is desired for any reason, the upper mold 1 and the lower mold 2 may be configured to move in the width direction Dh. For example, the upper mold 1 and the lower mold 2 may be configured such that in molding of a workpiece including a stringer extending in the height direction Dt and in the width direction Dh, relative movement between the upper mold 1 and the lower mold 2 is effected in the height direction Dt and the width direction Dh simultaneously to avoid contact of the stringer with the upper mold 1 or lower mold 2 before and after consolidation performed by the upper mold 1 and the lower mold 2 in a manner as described in the above embodiment.

As described above, the device and method of the present disclosure are suitable for use in production of parts of a relatively large machine such as an aircraft. The device and method of the present disclosure are also applicable to production of parts used in various other products and made of thermosetting resin. Although the workpiece in the above embodiment is a carbon fiber-reinforced thermoplastic resin product, the device and method of the present disclosure can be used, for example, for molding of a thermoplastic resin product reinforced with glass fibers or molding of a thermoplastic resin product that is not reinforced with any fibers.

### Reference Signs List

1, 30, 31 upper mold
1a, 1a1, 1a2 preheating region
1b downstream heating region
2, 2a lower mold
3 upper mold support
4 transfer device
5 pressure-receiving plate
10 control circuitry
21 stringer
100 molding device
Ds transfer direction
R1 to R5, R11, R12 temperature-controlled region
w workpiece

## Claims

1. A molding device comprising:
a lower mold that supports a workpiece containing a thermoplastic resin and that is heated to a predetermined temperature;
an upper mold that is opposed to the lower mold, that presses the workpiece, and that is heated to a predetermined temperature;
a transfer device that moves the lower mold and the upper mold relative to each other in a transfer direction of the workpiece; and
control circuitry, wherein
the lower mold includes temperature-controlled regions adjacent to one another in the transfer direction, the temperature-controlled regions including a first lower mold temperature-controlled region and a second lower mold temperature-controlled region having a temperature lower than a temperature of the first lower mold temperature-controlled region, and
the control circuitry changes proportions of the first lower mold temperature-controlled region and the second lower mold temperature-controlled region in the lower mold as a function of a relative position between the upper mold and the lower mold.

2. The molding device according to claim 1, wherein
the upper mold includes temperature-controlled regions adjacent to one another in the transfer direction, the temperature-controlled regions including, in order from upstream to downstream in the transfer direction, a preheating region and a downstream heating region having a temperature lower than a temperature of the preheating region.

3. The molding device according to claim 2, wherein
the downstream heating region includes temperature-controlled regions adjacent to one another in the transfer direction, the temperature-controlled regions including, in order from upstream to downstream in the transfer direction, a consolidation heating region and a cooling region having a temperature lower than a temperature of the consolidation heating region.

4. The molding device according to any one of claims 1 to 3, wherein
the temperature of the preheating region is equal to or higher than a melting point of the workpiece, and
the temperature of the downstream heating region is lower than the melting point of the workpiece.

5. The molding device according to any one of claims 1 to 4, wherein
the temperatures of the first lower mold temperature-controlled region and the second lower mold temperature-controlled region are equal to or higher than the temperature of the downstream heating region and lower than a melting point of the workpiece.

6. The molding device according to any one of claims 1 to 5, wherein
at least the upper mold or the lower mold includes a contact portion that contacts the workpiece and that has a concave cross-sectional shape extending in the transfer direction.

7. The molding device according to any one of claims 1 to 6, wherein
the preheating region of the upper mold is located away from the workpiece while the workpiece is pressed by the upper mold and the lower mold.

8. A molding method for molding a workpiece including a thermoplastic composite by using upper and lower molds heated to predetermined temperatures while transferring the workpiece in a transfer direction, the molding method comprising:
preheating the workpiece by the upper mold;
moving the lower mold supporting the workpiece relative to the upper mold in the transfer direction;
pressing the workpiece by the upper mold;
locating the upper mold away from the workpiece and moving the lower mold relative to the upper mold in the transfer direction; and
lowering a temperature of the lower mold in contact with the pressed workpiece below a temperature that the lower mold had during the pressing of the workpiece.
